# EUROPÄISCHE PATENTANMELDUNG

(11) **EP 3 549 659 A1**
(43) Veröffentlichungstag der Anmeldung: **09.10.2019**
(21) Anmeldenummer: 18165869.1
(22) Anmeldetag: 05.04.2018
(51) Int. Cl.: B01D 53/26, B01D 53/14

(54) **VERFAHREN ZUR BEHANDLUNG VON KOHLENSTOFFDIOXID**

(71) Anmelder: Siemens Aktiengesellschaft, 80333 München (DE)
(72) Erfinder: Ahmad, Suhel, 47198 Duisburg (DE); Paul, Christian, 40476 Düsseldorf (DE); Pek, Barend, 2253HH Voorschoten (NL); Schlüter, Lars, 47445 Moers (DE); Winter, Thomas, 45219 Essen (DE)

(57) **Zusammenfassung**

Die Erfindung betrifft ein Verfahren zur Behandlung von Kohlenstoffdioxid CO₂, insbesondere Verfahren zum Betrieb einer Kohlenstoffdioxid-Pipeline-Verdichter-Station (CPC). Zur Reduktion des Aufwandes wird vorgeschlagen, dass das Verfahren die folgenden weiteren Schritte umfasst:
a) Ansaugen eines ersten Gemischs (MX1) aus einem ersten Kohlenstoffdioxidmassenstrom TM1 und einem ersten Wasser-Massenstrom (HM1),
b) Verdichten des ersten Gemischstroms (MX1) ausgehend von einem ersten Druck P1 auf einen zweiten Druck P2,
c) Kühlen des verdichteten ersten Gemischstroms (MX1) unter Abgabe eines ersten Wärmestroms (Q1),
d) Expansion des ersten Gemischstrom (MX1),
e) Abscheiden eines zweiten Wassermassenstroms HM2 aus dem ersten GEmischstrom (MX1), sodass sich ein zweiter Gemischstrom (MX2) aus dem ersten Kohlenstoffdioxidmassenstrom (CM1) und dem verbleibenden dritten Wassermassenstrom (HM3) ergibt,
f) Verdichten des zweiten Gemischstroms (MX2) auf einen dritten Druck P3,
g) Weiterleitung des zweiten Gemischstroms (MX2),

## Beschreibung

Die Erfindung betrifft ein Verfahren zur Behandlung von Kohlenstoffdioxid, insbesondere ein Verfahren zum Betrieb einer Kohlenstoffdioxid-Pipeline-Verdichter-Station.

Im Zuge des Klimawandels sind Industrie und Wissenschaft bemüht, das klimawirksame Gas Kohlenstoffdioxid, dass das Produkt sowohl natürlicher Stoffwechselvorgänge als auch vieler vom Menschen durchgeführter Energieerzeugungsprozesse ist, Lösungen zu finden, zumindest die Emission dieses Gases zu verringern. Unter dem Akronym CCS-Technologie (Carbon Capture and Storage) werden dementsprechend Möglichkeiten diskutiert, neue Prozesse entsprechend emissionsarm zu gestalten oder bereits vorhandene Prozesse derart umzurüsten, dass die Kohlenstoffdioxidemission signifikant reduziert wird. In dem Gesamtzusammenhang ist es jeweils eine separate Herausforderung, das Kohlenstoffdioxid zu isolieren, zu einem Speicherort zu transportieren und entsprechend zu speichern. In dem Gesamtzusammenhang beschäftigt sich die Erfindung mit der Vorbereitung des Transports des Kohlenstoffdioxids. Eine gängige Methode zum Gastransport sieht die Benutzung von Rohrleitungen vor, sogenannten Pipelines. Um das zu transportierende Gas durch die Pipeline zu bewegen, sind sogenannte Verdichterstationen notwendig, die einerseits das Volumen des Gases verringern und andererseits den erforderlichen Druck zu Beginn einer Transportstrecke dem Gas aufprägen. In abhängig vom Gas und dem Abstand zwischen den Stationen wird das Gas verdichtet auf ca. 100 bar für Erdgas und unter 70 bar für CO2, damit das Gas in Richtung eines geringeren Druckniveaus am Zielort strömt. Da der Aufwand der Kohlenstoffdioxideinsparung zunächst für den Energieerzeuger mit keinem direkten Nutzen einhergeht, sind die energetischen Aufwendungen zum Verdichten des Gases gleichbedeutend mit einem Verlust am Wirkungsgrad der gesamten Energieerzeugungsanlage beziehungsweise gleichbedeutend mit möglichst gering zu haltenden Kosten. Nahezu unabhängig davon, zu welchem Zweck der Prozess dient, dem das zu vermeidende Klimagas CO₂ entstammt, ist in der Regel eine mehr oder weniger hohe Konzentration an Wasser in dem Kohlenstoffdioxid vorhanden. Diese Wasseranteile führen insbesondere in der Pipeline zu schwerwiegenden Korrosionsproblemen, weil die sich daraus ergebende Kohlensäure chemisch aggressiv ist. Im Grunde leiden sämtliche verfahrenstechnischen Komponenten an einer zu hohen Wasserkonzentration in dem Kohlenstoffdioxid. Dementsprechend ist es wünschenswert und teilweise auch vorgeschrieben, den Wassergehalt des Gases auf einen bestimmten Prozentsatz zu reduzieren. Wenn im Folgenden auf einen prozentualen Anteil in dem Kohlenstoffdioxid Bezug genommen wird, ist damit stets der Stoffmengenanteil (der molare Anteil) gemeint, wenn nicht ausdrücklich etwas anderes festgestellt ist.

Aus den "proceedings from the 55th conference on simulation and modeling (SIMS 55) of October 21/22, 2014 in Aalborg, Denmark" und von einem korrespondierenden Artikel "GLYCOL DEHYDRATION OF CAPTURED CARBON DIOXIDE USING ASPEN HYSYS SIMULATION, Lars Erik Øi* and Mirela Fazlagic, Telemark University College. Department of Process, Energy and Environmental Technology, Norway" ist es bekannt, im Anschluss an eine Verdichtung, Abkühlung, Wasserabscheidung, Verdichtung weitere chemische Trocknungsschritte für das Gas vorzusehen. Um die Reinheitsanforderungen an das Gas hinsichtlich der Freiheit von Wasser zu erfüllen, wird in dem Artikel im Einzelnen beschrieben, eine Abscheidung mittels Triethylenglykol (TEG) durchzuführen. Die TEG-Methode ist aufwändig, verbraucht signifikant viel Energie und ist insgesamt teuer.

Aus dem bekannten Stand der Technik ergibt sich für die Erfindung die Aufgabe, die Vorbereitung von Kohlenstoffdioxid zum Transport mittels einer Pipeline zu vereinfachen beziehungsweise erheblich kostengünstiger durchzuführen.

Aus der Erfindung ergibt sich insbesondere der Vorteil, dass entsprechend umweltfreundliche Abscheidungsverfahren für Kohlenstoffdioxid häufiger betriebswirtschaftlich akzeptabel eingestuft werden können und dementsprechend der vermehrte Einsatz zu einer verbesserten Klimaentwicklung führen könnte.

Zur Lösung der erfindungsgemäßen Aufgabe wird ein Verfahren der eingangs definierten Art mit den zusätzlichen Merkmalen des Kennzeichens des unabhängigen Verfahrensanspruchs vorgeschlagen. Die jeweils rückbezogenen Unteransprüche beinhalten vorteilhafte Weiterbildungen der Erfindung.

Infolge der erfindungsgemäßen Expansion nach der Verdichtung und Kühlung ist die anschließende Wasserabscheidung aus dem Kohlenstoffdioxid besonders effektiv. Überraschend ist die Abscheidung sogar derart effektiv, dass unter moderaten Anforderungsvorschriften an den in dem Kohlenstoffdioxid verbleibenden Wassergehalt vor dem Eintritt in eine Pipeline auf weitergehende, aufwändigere Wasserabscheidungsschritte verzichtet werden kann. Konkret kann dies bedeuten, dass lediglich mit der erfindungsgemäßen Vorgehensweise des Verdichtens, Rückkühlens, Expandierens und Abscheidens eine abschließende Vorbereitung auf den Transport mittels einer Pipeline stattfinden kann. Diese Vereinfachung führt zu signifikanten Kosteneinsparungen.

Eine vorteilhafte Weiterbildung der Erfindung sieht vor, dass die erfindungsgemäße Expansion nach dem Verdichten und Kühlen des Gasgemischs aus Kohlenstoffdioxid und Wasser mittels eines Expanders, bevorzugt mittels eines Turboexpanders (im Grunde eine Gasturbine) erfolgt und auf diese Weise der Druckabbau energetisch ausgenutzt werden kann, indem technische Arbeit erzeugt wird. Hierbei kann der Expansionsschritt zumindest zum Teil mittels eines Expanders beziehungsweise Turboexpanders durchgeführt werden. Hierbei ist es besonders zweckmäßig, wenn die aus der Expansion gewonnene technische Arbeit wieder zumindest teilweise zum Zwecke der Verdichtung des Kohlenstoffdioxidgemischs mit Wasser eingesetzt wird.

Um etwaige Umwandlungsverluste bei der Verwertung der Expansionsenergie zu vermeiden, ist es besonders zweckmäßig, wenn der Prozess der Verdichtung des ersten Gemischs und/oder der Prozess der Verdichtung des zweiten Gemischs mit dem Prozess der Expansion des ersten Gemischs zueinander eine mechanische Kopplung zur Übertragung technischer Arbeit aufweisen, insbesondere unter Zwischenanordnung eines Getriebes oder zumindest einer die Leistung direkt übertragenden Welle. Zu diesem Zweck ist es besonders sinnvoll, einen Getriebeverdichter einzusetzen. Derartige Getriebeverdichter sind bereits aus dem Markt der Luftzerlegungsanlagen bekannt. Getriebeverdichter eignen sich besonders gut, an einigen Enden von Ritzelwellen Expander vorzusehen und an anderen Wellenenden entweder der gleichen Ritzelwelle oder einer anderen Ritzelwelle des Verdichters die Verdichter dieses Gesamtprozesses vorzusehen.

Eine vorteilhafte Weiterbildung der Erfindung sieht vor, dass die Verdichtung des ersten Gemischs zunächst auf mindestens zwei bar erfolgt. Besonders bevorzugt wird die Verdichtung auf einem Druck zwischen 2 und 2,5 bar vollzogen.

Eine andere vorteilhafte Weiterbildung der Erfindung sieht vor, dass die Abkühlung nach der Verdichtung des ersten Gemischs auf eine Temperatur von unter 25°C erfolgt. Wenn die Temperatur des ersten Gemischs in dieser Abkühlung so weit abgesenkt wird, bevorzugt zwischen 18°C - 25°C, ist die Wasserabscheidung im Anschluss an die anschließende, ebenfalls abkühlend wirkende Expansion in dem Expander, besonders effizient. In der Regel können für eine Abkühlung auf etwa 20°C auch häufig natürliche Wärmesenken eingesetzt werden. Unter Umständen ist neben einer natürlichen Wärmesenke noch eine zusätzliche Abkühlung mittels eines geeigneten Wärmetauschers beziehungsweise Kühlmittels erforderlich.

Falls die Anforderungen an die Verringerung des Wassergehaltes über die Möglichkeiten der erfindungsgemäßen Methode zunächst hinausgehen, ist es auch sinnvoll, im Anschluss an die zunächst abschließende Verdichtung des zweiten Gemisches zusätzliche Verfahrensschritte zur Trocknung des Gemisches vorzusehen. Hierbei ist es auch denkbar, Verfahrensschritte zur chemischen Abscheidung von Wasser aus dem zweiten Gemisch anzuwenden. Aufgrund der erfindungsgemäßen Verfahrensschritte kann eine derartige nachgeschaltete chemische Behandlung aber signifikant kleiner dimensioniert werden, da bereits ein verhältnismäßig geringerer Wassergehalt erreicht ist.

Im Folgenden ist die Erfindung unter Bezugnahme auf eine Zeichnung zur Verdeutlichung näher beschrieben. Es zeigt:

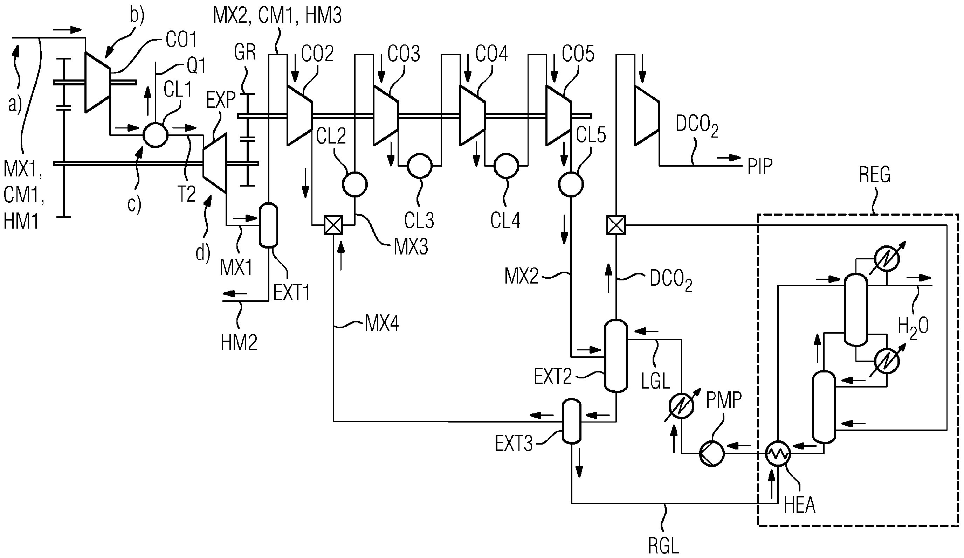

- Figur 1: eine schematische Darstellung des Verfahrens anhand eines Systemplans

Die schematische Darstellung der Figur 1 zeigt das erfindungsgemäße Verfahren beispielhaft anhand eines Systemplans.

Ein erstes Gemisch MX1 wird von einem ersten Verdichter CO1 im Rahmen eines ersten Verfahrensschrittes a) angesaugt. Das erste Gemisch MX1 besteht im Wesentlichen aus einem ersten CO₂-Massenstrom CM1 gemischt mit einem Wassermassenstrom HM1. In dem Beispiel besteht das Gemisch in etwa aus 94 mol% CO₂ und 6 mol% Wasserdampf bei einem Massenstrom von etwa 135000 kg/h. Ausgehend von einem Druck von etwa 1 bar und einer Eintrittstemperatur von etwa 44°C verdichtet der erste Verdichter CO1 das erste Gemisch MX1 auf etwa 2,3 bar bei einer Endtemperatur von etwa 117 °C.

In einem Verfahrensschritt c) wird das in dem Verfahrensschritt b) mittels des ersten Verdichters CO1 verdichtete erste Gemisch MX1 unter Abgabe eines ersten Wärmestroms Q1 in einem ersten Kühler CL1 im Wesentlichen isobar auf eine Temperatur von < 25°C - in dem konkreten Beispiel auf etwa 20°C - abgekühlt. Anschließend erfährt das erste Gemisch MX1 in einem Expander EXP während eines Verfahrensschritts d) eine Expansion auf etwa 1,6 bar, wobei sich das erste Gemisch MX1 zusätzlich auf etwa 4,62°C abkühlt. Begünstigt durch die Abkühlung findet in einem nachfolgenden Verfahrensschritt e) die Abscheidung eines zweiten Wassermassenstroms HM2 aus dem ersten Gemisch MX1 statt, so dass sich ein zweites Gemisch MX2 aus dem ersten Kohlenstoffdioxidmassenstrom CM1 und dem verbleibenden dritten Wassermassenstrom HM3 ergibt. In dem Abscheider EXT1, in dem auch ein Teil der Expansion bzw. eine Druckabsenkung erfolgt, ist der molare Anteil des Wassers HM2 aus dem ersten Gemisch zu etwa 99 mol-% entfernt worden. Anschließend erfolgt eine Verdichtung des zweiten Gemischs MX2 mittels eines zweiten Verdichters CO2 auf ein höheres Druckniveau. In dem konkreten Beispiel wird zwischen dieser letztgenannten Verdichtung und den anschließenden Verdichtungen noch ein Strom eines vierten Gemischs MX4 aus Wasser und Kohlenstoffdioxid zugemischt. In dem konkreten Beispiel führt das zu dem dritten Gemisch MX3. Diese Verfahrensführung ist rein optional und orientiert sich eher an der chemischen Nachbehandlung zur weiteren Trocknung des Gemischs als an den Erfordernissen des erfindungsgemäßen Kernprozesses. Im Anschluss an die Vermischung wird das dritte Gemisch MX3 mittels eines dritten Verdichters CO3, eines vierten Verdichters CO4 und eines fünften Verdichters CO5 und jeweils zwischen den Verdichtern angeordneter Kühler, einem zweiten Kühler CL2, einem dritten Kühler CL3, einem vierten Kühler CL4 und einem fünften Kühler CL5 im Ergebnis annähernd isotherm verdichtet. Der sich hieraus ergebende Enddruck des dritten Gemischs MX3 nach dem fünften Verdichter CO5 beträgt etwa 36 bar bei einer Temperatur von 30°C. Der Massenstrom beträgt etwa 133000 kg/h.

Das dritte Gemisch MX3 wird anschließend einer chemischen Nachbehandlung zur Verringerung des Wassergehaltes unterzogen. In einem zweiten Abscheider EXT2 wird das dritte Gemisch MX3 mit einem wasserabgereicherten Glykolstrom LGL in Kontakt gebracht, so dass es zu einer weiteren Trocknung kommt. Aus dem zweiten Abscheider EXT2 tritt ein trockener Kohlenstoffdioxidstrom GCO2 aus, der einer anschließenden Verdichtung mittels eines sechsten Verdichters CO6 unterzogen wird, bevor eine Einspeisung in die Kohlenstoffdioxidpipeline PIP erfolgt.

In der Figur 1 ist auch eine Aufbereitung des mit Wasser angereicherten Glykols RGL schematisch skizziert. Das angereicherte Glykol RGL wird einem Regenerator zugeführt, wo ein Strom Wasser H2O abgeschieden wird. Das abgereicherte Glykol LGL wird wieder dem zweiten Abscheider EXT zugeführt. Der Strom des vierten Gemischs MX4, der einen zu hohen Wassergehalt für die Pipeline PIP enthält, wird, wie bereits oben beschrieben, zwischen dem zweiten Verdichter CO2 und dem dritten Verdichter CO3 dem zweiten Stromgemisch MX2 beigemischt, so dass das dritte Gemisch MX3 entsteht.

## Patentansprüche

1. Verfahren zur Behandlung von Kohlenstoffdioxid (CO2), insbesondere Verfahren zum Betrieb einer Kohlenstoffdioxid-Pipeline-Verdichter-Station (CPC), **gekennzeichnet durch** die folgenden Schritte:
a) Ansaugen eines ersten Gemischs (MX1) aus einem ersten Kohlenstoffdioxidmassenstrom (TM1) und einem ersten Wasser-Massenstrom (HM1),
b) Verdichten des ersten Gemischstroms (MX1) ausgehend von einem ersten Druck P1 auf einen zweiten Druck P2,
c) Kühlen des verdichteten ersten Gemischstroms (MX1) unter Abgabe eines ersten Wärmestroms (Q1),
d) Expansion des ersten Gemischstrom (MX1),
e) Abscheiden eines zweiten Wassermassenstroms HM2 aus dem ersten Gemischstrom (MX1), sodass sich ein zweiter Gemischstrom (MX2) aus dem ersten Kohlenstoffdioxidmassenstrom (CM1) und dem verbleibenden dritten Wassermassenstrom (HM3) ergibt,
f) Verdichten des zweiten Gemischstroms (MX2) auf einen dritten Druck (P3),
g) Weiterleitung des zweiten Gemischstroms (MX2).

2. Verfahren nach Anspruch 1,
wobei Schritt d) zumindest zum Teil mittels eines Expanders (EXP) durchgeführt wird und aus der Expansion gewonnene technische Arbeit zumindest teilweise in der Verdichtung der Schritte b) und/oder f) eingesetzt wird.

3. Verfahren nach mindestens einem der Ansprüche 1, 2,
wobei die Verfahrensschritte b), d) und f) zueinander eine mechanische Kopplung zur Übertragung technischer Arbeit aufweisen, insbesondere unter Zwischenanordnung eines Getriebes (GR).

4. Verfahren nach mindestens einem der vorhergehenden Ansprüche 1 - 3,
wobei die Verdichtung in Schritt b) auf mindestens P2 = 2 bar erfolgt.

5. Verfahren nach mindestens einem der vorhergehenden Ansprüche 1 - 4,
wobei die Abkühlung in Schritt c) auf eine Temperatur T2 < 25°C erfolgt.

6. Verfahren nach mindestens einem der vorhergehenden Ansprüche 1 - 5,
wobei im Anschluss an Schritt g) Verfahrensschritte zur chemischen Abscheidung von Wasser (H2O) aus dem zweiten Gemisch (MX2) angewendet werden.
